# EUROPEAN PATENT SPECIFICATION

(11) **EP 0 928 256 B1**
(45) Date of publication and mention of the grant of the patent: **02.05.2002**
(21) Application number: 97943521.1
(22) Date of filing: 24.09.1997
(51) Int. Cl.: B60N 2/44, B60N 2/42

(54) **Vehicle seat assembly with safety restraint belt**
Fahrzeugsitzaufbau mit Sicherheitsgurt
Ensemble de siège de véhicule comportant des ceintures de sécurité

(30) Priority: 24.09.1996 US 25313 P; 24.02.1997 US 805142; 24.02.1997 US 805158; 28.02.1997 US 808892
(43) Date of publication of application: 14.07.1999
(73) Proprietor: Lear Corporation, Southfield, MI 48034 (US)
(72) Inventor: KOENIG, Kirk, P., Waterford, MI 48327 (US); QUINCOSES, Ricardo, O., Grand Blanc, MI 48343 (US); RINKE, Dean, Yale, MI 48097 (US); BERNHARDT, Don, H., Walled Lake, MI 48390 (US); FARQUHAR, Mark, Alan, Ortonville, MI 48462 (US); MATTHEWS, Bryon, Grand Blanc, MI 48439 (US)
(74) Representative: Archer, Philip Bruce
(86) International application number: US9717060
(87) International publication number: WO9813227

(56) References cited:
- GB-A- 2 023 749
- US-A- 4 585 273
- US-A- 5 123 706
- US-A- 5 501 509
- US-A- 5 597 205
- US-A- 5 645 316
- PATENT ABSTRACTS OF JAPAN vol. 96, no. 12, 26 December 1996 & JP 08 216918 A (MAZDA), 27 August 1996,

## Description

### BACKGROUND OF THE INVENTION

### 1. Field of the Invention

The subject invention relates generally to a vehicle seat having an integral safety restraint system, and more particularly to such a vehicle seat including an improved structural design capable of withstanding high impact loading without jeopardizing structural integrity or occupant safety (see, for example, US-A-4 585 273, corresponding to the preamble of independent claim 1).

The subject invention also relates to such a seat further including a detachable cantilevered headrest and, more particularly, a headrest having a ratchet mechanism for adjusting the angular position of the headrest.

The subject invention also relates to such a seat further having an improved mounting configuration with respect to the underlying floor panel structure.

### 2. Description of Related Art

Vehicular, and in particular automotive, seat assemblies are becoming increasingly unitized so that they can be rapidly and easily installed as a modular component in the passenger compartment via an assembly line type operation, thereby reducing vehicle assembly time and the assembly line personnel required to complete the installation. One such adaptation toward this end has been the integration of a safety restraint belt with the seat assembly. In this manner, the seat assembly together with the safety restraint belt are installed as an integral unit in the passenger compartment at the time of vehicle manufacture. One important consideration when the safety restraint belt is integrated with the seat assembly becomes the strength and integrity of the seat assembly components so as to withstand the severe loading which may occur in emergency situations of sudden deceleration, such as may occur in a collision. Sudden deceleration creates elevated forces resulting from the mass of a seated and restrained occupant tending to remain in motion, while the vehicle rapidly decelerates. Under these conditions, when the safety restraint belt is rapidly tensioned by the momentum of an occupant, the restraining forces are transmitted through the safety restraint belt to its points of connection with the seat assembly, which usually comprise at least two connection points on the bottom frame (for a lap strap segment) and either a connection point or pulley on the backrest frame (for a shoulder strap segment). These forces travel from the connection points, through the various structures in the seat assembly, and finally to the locations at which the bottom frame is anchored to the floor of the passenger compartment. Each and every structural component through which forces flow during periods of severe loading must be adequately designed to prevent unnecessary injury to the occupant.

Furthermore, the seat assembly must be properly designed to allow free flowing movement of the safety restraint belt as it is played out and reeled in. It must not snag or cause binding in the safety restraint belt in any way. The subject invention is directed at providing a seat assembly with an integrated safety restraint belt which is capable of withstanding severe loading resulting from sudden deceleration, which is easily and quickly installed in the passenger compartment of an automobile during manufacture, and which does not cause binding or snagging of the safety restraint belt.

Vehicle seat assemblies also often include headrests.

Various headrests are known in the art which include a headrest body pivotally coupled to a pair of vertical mounting posts for enabling the headrest body to pivot in a forward and rearward direction to achieve a desired position of angular adjustment relative to a vehicle seat back. Such headrest are also known to include various ratcheting mechanisms which allow the headrest to pivot forwardly yet limit or prevent rearward pivotal movement of the headrest for safety reasons.

Many of these known mechanisms are complicated in design and require numerous linkages and interaction of several parts for the operation of the ratchet mechanism. Additionally, the ratcheting mechanism often requires additional structure attached between the headrest body and each of the headrest posts to allow the headrest to pivot about each of the vertical posts.

Examples of particular previous proposed seat assemblies are shown and described in GB-A-2023749 and the above-mentioned US-A-4585273.

### SUMMARY OF THE INVENTION

According to the present invention there is provided a vehicle seat assembly as claimed in the appended claim 1. Further features thereof are disclosed in the appended dependent claims 2 to 18.

The subject invention relates to a vehicle seat assembly having an integrated safety restraint belt, and comprising a bottom frame having laterally opposed first and second sides, a backrest frame having an upper end and a lower end, a first pivot element pivotally connecting the lower end of the backrest frame to the first side of the bottom frame, a second pivot element pivotally connecting the lower end of the backrest frame to the second side of the bottom frame, and a safety restraint belt having a shoulder strap segment connected to the upper end of the backrest frame generally above the first pivot element. The improvement of the invention as disclosed in claim 1 comprises an anti-rotation stop plate disposed between the bottom frame and the first pivot element for restraining unwanted deformation of the first pivot element relative to the bottom frame in response to high load forces applied to the upper end of the backrest frame by the shoulder strap segment of the safety restraint belt.

The stop plate helps control and limit deflection of the backrest frame under severe loading conditions where the first pivot element begins to deform relative to the bottom frame. The stop plate is a sacrificial element which absorbs of a quantity of the forces of a yielding backrest frame to buffer the occupant to some extent from the sudden deceleration during emergency circumstances.

The backrest frame may include at least one stile having a hollow passage extending between the lower end and an opening adjacent the upper end. The safety restraint belt having a shoulder strap segment extending from the opening adjacent the upper end of the backrest frame, and a concealed segment passing through the hollow passage of the stile and terminating at the shoulder strap segment, and a spool disposed in the bottom frame for dispensing the safety restraint belt to the concealed segment. A guide is disposed within the hollow passage of the stile for controlling the concealed segment within the hollow passage during movement of the safety restraint belt therealong. The guide helps to control the concealed segment of safety belt within the hollow passage of the stile as it is played out and reeled in, particulary when the backrest frame is of the type which can be articulated relative to the bottom frame.

There is also disclosed a vehicle seat assembly having an integrated safety restraint belt, comprising a backrest frame having an upper end and a lower end, a bottom frame pivotally connected to the lower end of the backrest frame, the bottom frame having a first side rail and a second side rail, a first mounting element slidably disposed relative to the first side rail and a second mounting element slidably disposed relative to the second side rail, and a safety restraint belt anchored to the bottom frame. At least one of the first and second side rails has a cuff for preventing unwanted deformation of the side rail in the event of severe loading as a result of high tensile forces imposed on the safety restraint belt. The cuff helps rigidify the first and/or second side rails so as to better withstand elevated forces occurring during instances of sudden deceleration. That is, the cuffs help to prevent expansion of the shaped cross-section of the side rails

The vehicle seat assembly may also include an adjustable headrest assembly comprising a mounting post for mounting the headrest assembly to a vehicle seat. An elongated headrest body extends horizontally between opposing first and second side ends and defines a tubular opening for receiving the mounting post therethrough between the first and second ends. The first side end includes a cavity formed integrally with the headrest body. A ratcheting mechanism is disposed within the cavity of the first end and operatively connected between the mounting post and the headrest body for providing forward ratcheting pivotal movement of the headrest body relative to the mounting post while locking the headrest body against pivotal rearward movement.

The vehicle seat assembly having an integrated safety restraint belt, and in combination with an automobile including a floor panel having an edge and an outer sill panel fixed to the edge of the floor panel. A seat assembly is fixed to the floor panel. The seat assembly includes a bottom frame having a first side rail adjacent the outer sill panel and a second side rail. A sill anchor is provided for attaching the first side rail directly to the outer sill panel. Similarly, a floor anchor is provided for attaching the second side rail directly to the floor panel.

The combined anchoring of the bottom frame to the floor panel and the outer sill panel provides a sturdy mounting arrangement to withstand high loading and stresses during sudden deceleration, which high loading results from the safety restraint belt being connected directly to the bottom and backrest frames of the seat assembly.

### BRIEF DESCRIPTION OF THE DRAWINGS

Other advantages of the present invention will be readily appreciated as the same becomes better understood by reference to the following detailed description when considered in connection with the accompanying drawings wherein:
Figure 1 is a perspective view of an integrated-belt automotive seat assembly according to the subject invention;
Figure 2 is a partially exploded perspective view of an integrated-belt automotive seat assembly according to the subject invention with the fabric and cushion layers removed;
Figure 3 is side view of the first side rail and first pivot element, showing the nose portion of the first pivot element bearing against the stop plate in phantom as during severe sudden deceleration;
Figure 4 is a fragmentary rear perspective view of the first side rail showing the cuff;
Figure 5 is a side view of the seat assembly showing the concealed segment of the safety restraint belt routed within the hollow stile of the backrest frame;
Figure 6 is a side view of the second side rail showing the second hook anchor and floor anchor mounting features; and
Figure 7 is a top view of the first and second side rails showing the hook anchor and floor/sill anchor mounting features.
Figure 8 is a perspective view of the vehicle seat assembly with the headrest assembly in the lowered position;
Figure 9 is a perspective view of the vehicle seat assembly with the headrest assembly in the raised position;
Figure 10 is an exploded perspective view of the headrest assembly cantilevered and detached from the seat assembly;
Figure 11 is an end view of the first end of the headrest body and ratchet mechanism in the rearward position;
Figure 12 is an end view of the first end of the headrest body and ratchet mechanism in the forward position;
Figure 13 is an explode perspective view of the seat back and headrest assembly;
Figure 14 is an exploded perspective view of the adjustable headrest tower and cover assembly;
Figure 15 is a perspective view of the adjustable window cover; and
Figure 16 is a cross-sectional view taken through lines 15-15 of Figure 15.

### DESCRIPTION OF THE PREFERRED EMBODIMENT

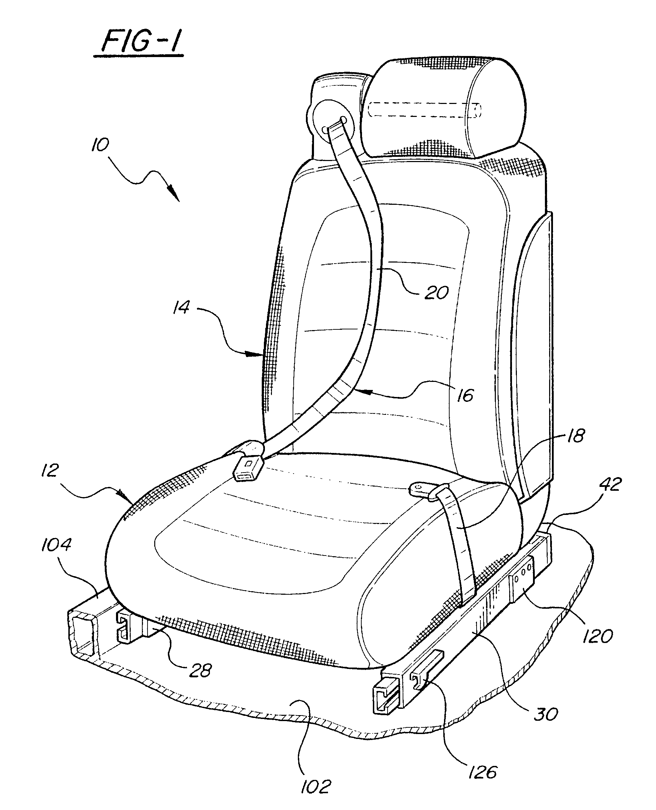

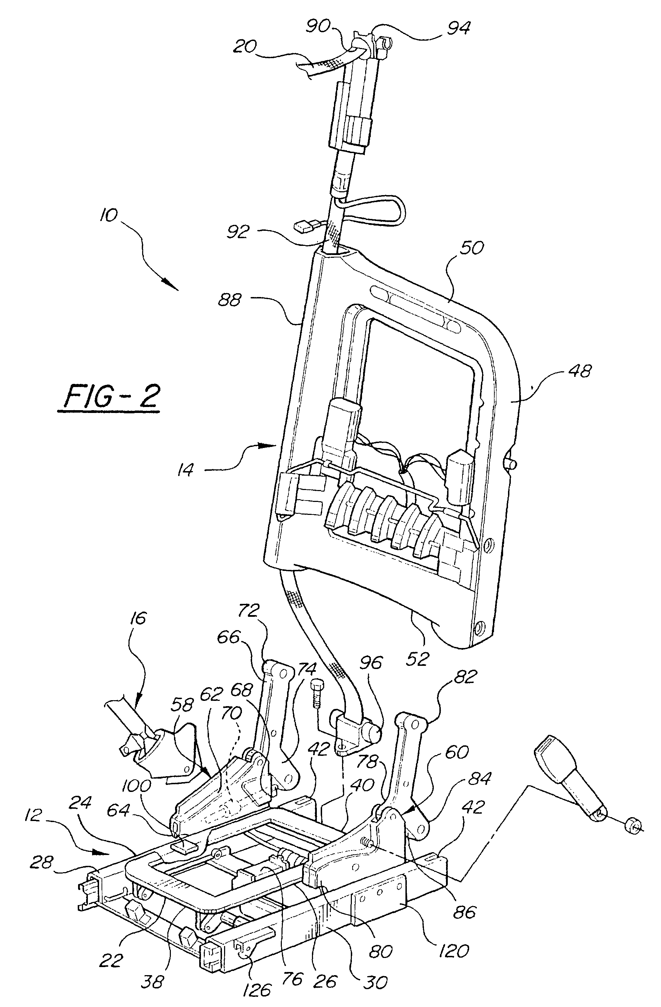

Referring to the Figures, wherein like numerals indicate like or corresponding parts throughout the several views, a vehicle seat assembly is generally indicated at 10. The vehicle seat assembly 10 is of the type adapted for use in an automobile having an interior passenger compartment with at least one doorway access, such that the seat assembly 10 is disposed in the passenger compartment proximate the doorway. The seat assembly 10 includes a bottom or seat portion, generally indicated at 12, and a backrest portion, generally indicated at 14, both shown in Figure 1. The seat assembly 10 is of the typical type including an outer fabric or other sheet-like cover and an inner layer of foam or other cushion material. In Figure 2, the seat assembly 10 is shown with the outer cover and cushion layers removed.

The seat assembly 10 is of the type having an integrated safety restraint belt, generally indicated at 16. The safety restraint belt 16, including a lap strap segment 18 and shoulder strap segment 20, is anchored directly to the seat assembly 10 so that in the event of loading, as during sudden deceleration, elevated forces resulting from the mass of a seated and restrained occupant are transferred from the safety restraint belt 16 to the seat assembly 10. Therefore, the design of the seat assembly 10 and its attachment within the passenger compartment of an automobile must be capable of withstanding and accommodating the foreseeable forces of sudden deceleration.

The seat portion 12 includes an internal bottom frame 22, best shown in Figure 2. The bottom frame 22 has laterally opposed first 24 and second 26 sides. In the preferred embodiment, the first side 24 is associated with the outside or door side of the passenger compartment. A first side rail 28 extends along the first side of the bottom frame 22, and a second side rail 30 extends along the second side of the bottom frame 22. The first 28 and second 30 side rails each have a generally C-shaped cross section including a top 32, a bottom 34 and a side 36. The respective sides 36 of each of the first 28 and second 30 side rails are disposed toward, or facing, one another. The first side rail 28 includes a forward end corresponding to a forward end 38 of the bottom frame 22, and a rearward end corresponding to a rearward end 40 of the bottom frame 22. Likewise, the second side rail 30 includes a forward end corresponding to the forward end 38 of the bottom frame 22, and a rearward end corresponding to the rearward end 40 of the bottom frame 22. In common fashion, the first 28 and second 30 side rails are telescopically adjustable to allow adjustment of the seat assembly position within the passenger compartment depending upon the size of the occupant.

Furthermore, each of the first 28 and second 30 side rails include a respective cuff 42 affixed to the rearward ends thereof for preventing unwanted deformation of the side rails 28, 30 in the event of severe loading as a result of high tensile forces imposed on the safety restraint belt 16. The cuffs 42 include a body 44 having opposing top and bottom ends and a pair of ears 46 extending generally perpendicularly from the opposing top and bottom ends of the body 44. The ears 46 are fixedly attached one each to the top 32 and bottom 34 of the respective first 28 and second 30 side rails, as by welding. The cuffs 42 help rigidify the side rails 28, 30, so as to better withstand elevated forces occurring during instances of sudden deceleration. That is, the cuffs 42 help to prevent expansion of the C-shaped cross-section of the side rails 28, 30.

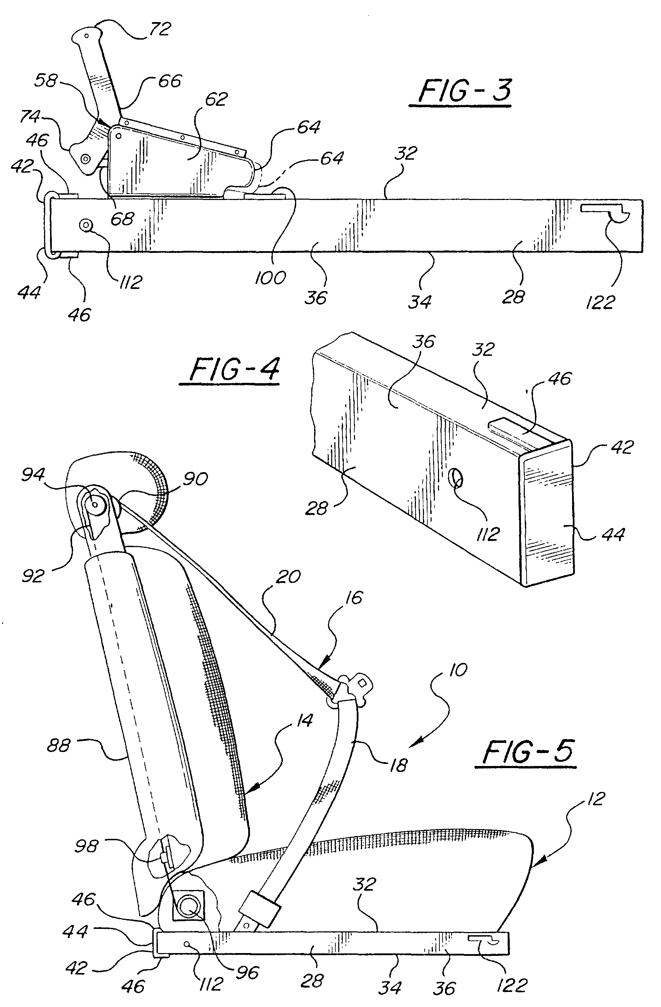

The backrest portion 14 includes an internal backrest frame 48 having an upper end 50 and a lower end 52, best shown in Figure 2. A first pivot element, generally indicated at 58 in Figures 2 and 3, pivotally connects the lower end 52 of the backrest frame 48 to the first side 24 of the bottom frame 22. Similarly, a second pivot element, generally indicated at 60, pivotally connects the lower end 52 of the backrest frame 48 to the second side 26 of the bottom frame 22. The first 58 and second 60 pivot elements permit and control articulating movement of the backrest portion 14 relative to the seat portion 12 to optimize occupant comfort.

The first pivot element 58 includes a first power adjustor for controlling pivotal movement of the backrest frame 48 relative to the bottom frame 22. The first power adjustor includes a protective housing 62 having a forwardly protruding nose portion 64, and a first bell crank 66 pivotally carried in the housing 62. An actuator screw 68 and nut 70 disposed within the housing 62. The first bell crank 66 includes an upper leg 72 fixed to the lower end 52 of the backrest frame 48 and a lower leg 74 fixed to the actuator screw 68. An electric motor 76 forcibly rotates the nut 70, via a flexible drive shaft, causing the actuator screw 68 to either pull or push the lower leg 74 of the first bell crank 66. This, in turn, pivots the backrest portion 14 relative to the seat portion 12.

In like manner, the second pivot element 60 also includes a second power adjustor for controlling pivotal movement of the backrest frame 48 relative to the bottom frame 22 in unison with the first power actuator. A second bell crank 78 is pivotally carried in a protective housing 80, and has an upper leg 82 fixed to the lower end 52 of the backrest frame 48 and a lower leg 84 fixed to an actuator screw 86. The same electric motor 76 simultaneously actuates both of the first and second power adjustors via flexible drive shafts.

The backrest frame 48 includes at least one stile 88 having a hollow passage extending between the lower end 52 and an opening 90 adjacent the upper end 50. The hollow stile 88 is generally aligned with the first side 24 of the bottom frame 22, and normally corresponds to the outside, or door side, of the automobile in which case the seat assembly 10 shown in Figure 2 would be positioned on the passenger side of the automobile. A concealed segment 92 of the safety restraint belt 16 is enshrouded within hollow stile 88. The concealed segment 92 terminates at the shoulder strap segment 20. A pulley 94 is disposed within the hollow passage of the stile 88, adjacent the opening 90, for routing the safety restraint belt 16 between the concealed 92 and shoulder strap 20 segments.

A power spring driven spool 96 is secured to the rearward end 40 of the bottom frame 22 for dispensing the safety restraint belt 16 to the concealed segment 92 within the stile 88. To control the concealed segment 92 within the hollow passage of the stile 88 during playing out and reeling in of the safety restraint belt 16, a guide 98 is disposed within the hollow passage of the stile 88. The guide 98 is disposed proximate the lower end of the backrest frame. Preferably, the guide 98 is made from a light-weight plastic material and secured within the stile 88 by simple fasteners.

An anti-rotation stop plate 100 is disposed between the bottom frame 22 and the first pivot element for restraining unwanted deformation of the first pivot element relative to the bottom frame 22 in response to high load forces applied to the upper end 50 of the backrest frame 48 by the shoulder strap segment 20 of the safety restraint belt 16. The anti-rotation stop plate 100 preferably comprises a rigid pad, in the form of a generally horizontal shelf extending from the first side rail 24. The nose portion 64 of the housing 62 is disposed just above the stop plate 100, as best shown in Figures 2 and 3.

The stop plate 100 together with the nose portion 64 of the first housing 62 serve to control and limit deflection under severe loading conditions where the first pivot element begins to deform relative to the bottom frame 22. The first pivot element is particularly prone to early deformation because the shoulder strap segment 20 is located at a distance generally above the first pivot element, creating a substantial bending moment during severe loading conditions. During these instances, the nose portion 64 of the first housing 62 bends forwardly, as shown in Figure 3, ultimately bearing against the stop plate 100 which resists its continued movement. By carefully spacing the nose portion 64 and the stop plate 100, and by selecting the yield characteristics of the stop plate 100, catastrophic failure can be avoided. Additionally, the occupant can be buffered to some extent from the sudden deceleration due to the absorption of a quantity of the forces by the sacrificial stop plate 100.

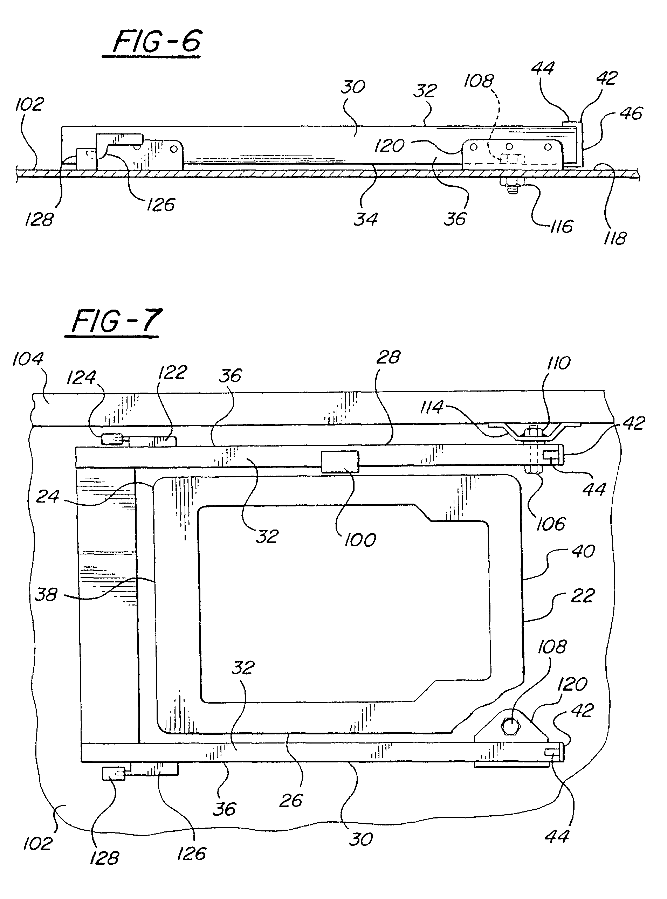

Referring now to Figures 6 and 7, an automobile incorporating the features of the subject invention includes a floor panel 102 having a lateral edge and an outer sill panel 104 fixed to the edge of said floor panel 102. The outer sill panel 104 is sometimes also referred to as a rocker or rocker panel. The seat assembly 10 is fixed in position upon the floor panel 102 in such a manner that the first side rail 28 lies adjacent the outer sill panel 104 and the second side rail is spaced from the outer sill panel 104. To securely hold the seat assembly 10 in position even during severe loading conditions, a sill anchor 106 is provided for attaching the first side rail 28 directly to the outer sill panel 104 and a floor anchor 108 attaches the second side rail 30 directly to the floor panel 102.

In the preferred embodiment illustrated in the Figures, the sill anchor 106 is disposed adjacent the rearward end 40 of the first side rail 28. The sill anchor 106 may include a threaded sill fastener, in combination with a sill nut 110 integrally attached to the outer sill panel 104 and which receives the threaded sill fastener. The threaded sill fastener extends generally horizontally between the sill nut 110 and the first side rail 28. Most expediently, the first side rail 28 includes a generally horizontally extending mounting hole 112 therein for receiving the threaded sill fastener. The sill nut 110 is welded to a generally vertical mounting surface in a distended portion 114 of the outer sill panel 104.

Likewise, the floor anchor 108 is disposed adjacent the rearward end 40 of the second side rail 30. The floor anchor also includes a threaded floor fastener, in combination with an floor nut 116, integral with the floor panel 102, for receiving the threaded floor fastener of the floor anchor 108. The threaded floor fastener extends generally vertically between the floor nut 116 and the second side rail 30. The floor nut 116 is welded to the underside of a generally horizontal mounting surface 118 the floor panel 102. In the embodiment illustrated in the Figures, the second side rail 30 includes an L-shaped mounting bracket 120 abutting against the horizontal mounting surface 120. The mounting bracket has a generally vertically extending hole therein for receiving the threaded floor fastener.

To further facilitate the installation process, the first side rail 28 includes a first hook anchor 122 disposed adjacent the forward end 38 of the bottom frame 22. The floor panel 102 includes a complimentary first hook receptacle 124 for operatively receiving the first floor anchor 122 to attach the first side rail 28 directly to the floor panel 102. In like manner, the second side rail 30 includes a second hook anchor 126 adjacent the forward end 38. A complimentary second hook receptacle 128 is mounted to the floor panel 102 for operatively receiving the second floor anchor 126 to attach the second side rail 30 directly to the floor panel 102.

Accordingly, in order to install the subject seat assembly 10 within the passenger compartment of the automobile, the forward end 38 is tilted toward the first 124 and second 128 hook receptacles, and the corresponding first 122 and second 126 hook anchors brought into registry therewith. Then, the rearward end 40 of the assembly 10 is lowered into position, until the sill anchor 106 is aligned with the sill nut 110 and the floor anchor 108 is aligned with the floor nut 116, at which time the respective threaded fasteners are advanced to securely attach the seat assembly 10 within the passenger compartment. The combined anchoring of the bottom frame 22 to the floor panel 102 and the outer sill panel 104 provides a secure and particularly robust mounting arrangement, which is advantageous in view of the additional foreseeable forces resulting from the safety restraint belt 16 being integrated with the seat assembly 10.

The method of installing the subject seat assembly 10 within the passenger compartment of the automobile includes the steps of attaching or otherwise securing the outer sill panel 104 to the floor panel 102. A generally horizontal mounting surface 118 is formed in the floor panel, and a generally vertical mounting surface 114 is formed in the outer sill panel 104. Then, the first side rail 28 of the bottom frame 22 is attached to the vertical mounting surface 114 of the outer sill panel 104 while the second side rail 30 is attached to the horizontal mounting surface 118 of the floor panel 102. As mentioned above, the combined anchoring of the bottom frame 22 to the floor panel 102 and the outer sill panel 104 provides a sturdy mounting arrangement to withstand high loading and stresses during sudden deceleration, as a result of the safety restraint belt 16 being connected directly to the bottom 22 and backrest 48 frames of the seat assembly 10.

The method step of attaching the first side rail 28 to the vertical mounting surface 114 of the outer sill panel 104 includes screwing a threaded sill fastener between the rearward end 40 of the first side rail 28 and the outer sill panel 104. Likewise, the step of attaching the second side rail 30 to the horizontal mounting surface 118 of the floor panel 102 includes screwing a threaded floor fastener between the rearward end 40 of the second side rail 30 and the floor panel 102. The step of attaching the first side rail 28 to the vertical mounting surface 114 further includes coupling the first hook anchor 122 between the forward end 38 of the first side rail 28 and the outer sill panel 104, whereas the step of attaching the second side rail 30 to the horizontal mounting surface 118 of the floor panel 102 further includes coupling the second hook anchor 126 between the forward end 38 of the second side rail 30 and the floor panel 102. The screwing of the threaded sill fastener step includes welding the sill nut 110 to the vertical mounting surface 114 of the outer sill panel 104, and the screwing of the threaded floor fastener step includes welding the floor nut 116 to the horizontal mounting surface 118 of the floor panel 102.

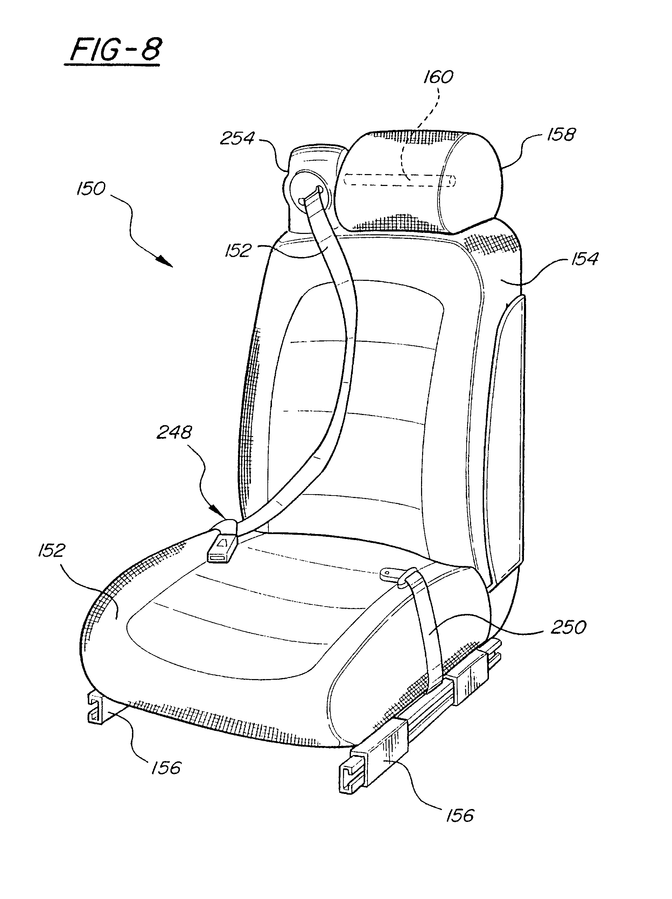

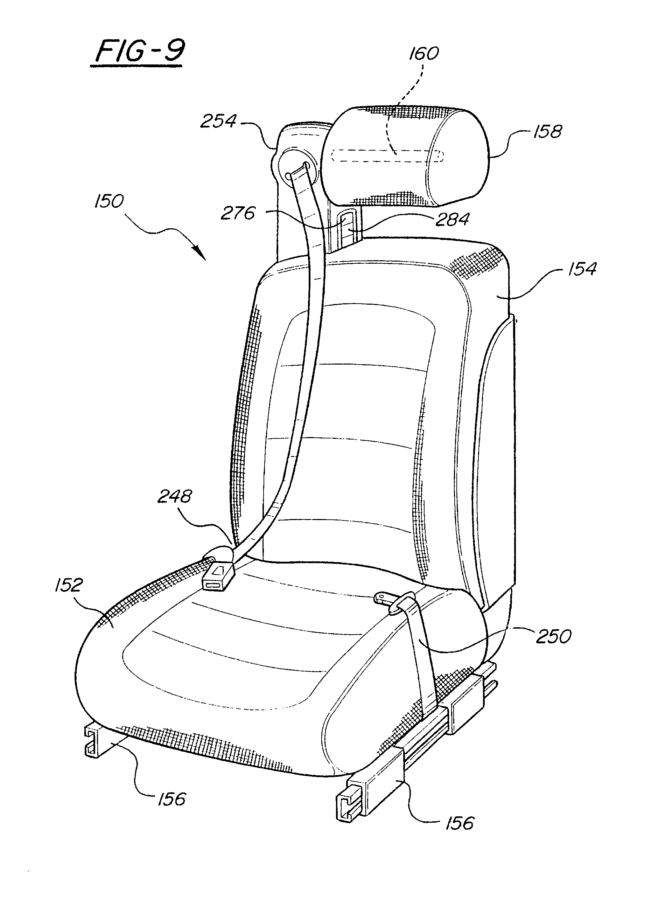

Referring to Figures 8-16, wherein like numerals reference like or corresponding parts throughout the several views, an automotive vehicle seat assembly is generally shown at 150 in Figures 8 and 9. The seat assembly 150 comprises a generally horizontal seat bottom 152 upon which an occupant sits, and generally upright seat back 154 coupled to the seat bottom 152. The seat assembly 150 is commonly supported by a pair of fore and aft adjustable seat tracks 156 which are then mounted to the vehicle floor (not shown). The seat bottom 152 and seat back 154 are commonly constructed of a contoured polyurethane foam pad encapsulated in a trim cover of cloth fabric, vinyl or leather.

An adjustable headrest assembly is generally shown at 158 and includes a mounting post 160 for mounting or attaching the headrest assembly 158 to the vehicle seat 150. The headrest assembly 158 is vertically adjustable between a lower position, as shown in Figure 8, with the headrest 158 immediately adjacent the top of the seat back 154 and a raised position, as shown in Figure 9, with the headrest assembly 158 spaced vertically above the seat back 154. The headrest assembly 158 is also pivotally adjustable in both the forward and rearward directions as will be described in greater detail below.

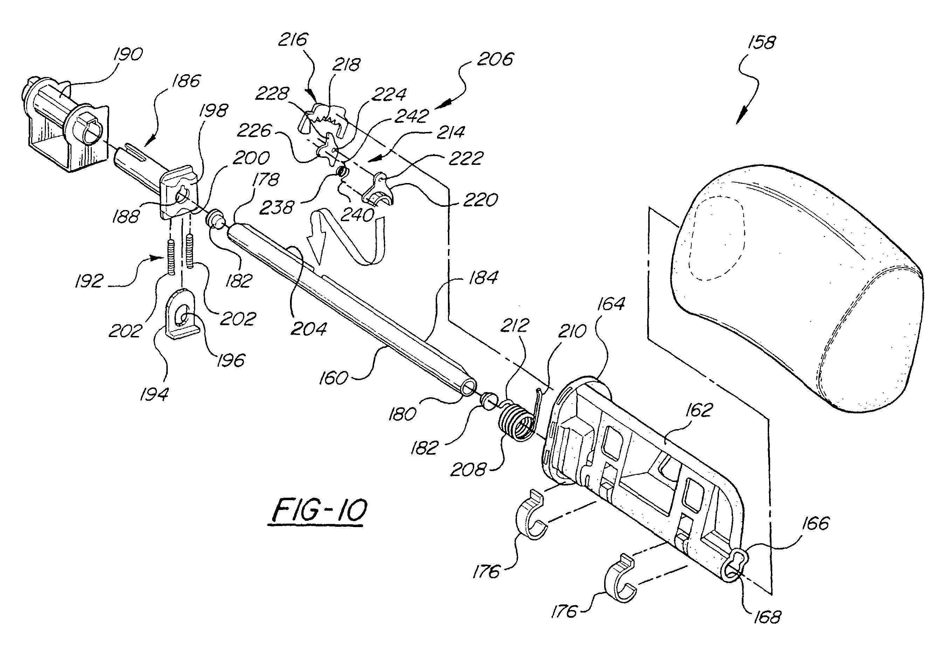

As shown in Figure 10, the headrest assembly 158 further includes an elongated headrest body 162 extending horizontally between opposing first 164 and second 166 side ends and fabricated of a rigid organic polymeric material defining a tubular opening 168 between the side ends 164, 166 within the headrest body 162. The mounting post 160 is received through the tubular opening 168 between the first 164 and second 166 side ends. The first side end 164 includes a generally oval shaped cavity 170 formed integrally with the headrest body 162 including an upper portion 172 and a lower portion 174. The tubular opening 168 for receiving the mounting post 160 extends through the lower portion 174 of the cavity 170 to the second side end 166.

A pair of retaining clips 176 extend around and through a portion of the headrest body 162 into the tubular opening 168 to engage and retain the mounting post 160 in the opening 168 between the first 164 and second 166 ends of the headrest body 162. The mounting post 160 has a distal end 178 extending outwardly from the tubular opening 168 in the first end 164 of the headrest body 162 and a proximal end 180 extending to the second side end 166 of the headrest body 162. Each of the distal 178 and proximal 180 ends of the mounting post are closed by end caps 182. The mounting post 162 is constructed from a single piece of cylindrical metal tube having a generally circular cross section and a raised ridge 184 extending between the distal 178 and proximal 180 ends.

An elongated headrest guide sleeve 186, as shown in Figure 10, has a tubular opening 186 for receiving the distal end 178 of the mounting post 162 to detachably connect the headrest assembly 150 to a portion of the vehicle seat 150. The guide sleeve 186 is received and fixedly secured within a tubular support structure 190 which forms an upper portion of an adjustable tower which will be described in greater detail herein below. The guide sleeve 186 includes a locking mechanism 192 which comprises a spring bias detente 194 operatively connected to the sleeve 186 and having an opening 196 for receiving the distal end 178 of the mounting post 160 therethrough. The spring bias detent 194 forms a generally rectangular shaped tab member which is received into a generally rectangular housing 198 having a slot 200 therein for slidably receiving the detent 194 and symmetrically aligning the opening 196 with the tubular opening 188 in the guide sleeve 186. A pair of springs 202 urge the detent 194 out of the housing 198 and into engagement with a notch 204 in the raised ridge 184 of the mounting post 160. More specifically, with the spring bias detent 194 depressed against the biasing force of the springs 202 such that the opening 196 aligns with the tubular opening 188 in the guide sleeve 186, the distal end 178 may be received through the opening 196 in the detent 194 and into the guide sleeve 186. Once the detent 194 is released, the biasing force of the springs 202 urge the edge of opening 196 against the raised ridge 184 of the mounting post 160 until the detente 194 is received and locked into the notch 204 which prevents the mounting post 160 from being removed from the guide sleeve 186.

Referring to Figures 10, 11 and 12, a rachet mechanism 206 is disposed within the cavity 170 of the first side end 164 and operatively connected between the mounting post 160 and the headrest body 162 for providing forward ratcheting pivotal movement of the headrest body 162 relative to the mounting post 160 while locking the headrest body 162 against pivotal rearward movement. A biasing member 208 constantly urges the headrest body 162 toward the rearward pivotal movement. The biasing member 208 comprises a torsion spring supported on the mounting post 162 and having one end 210 engaging the inner surface of the cavity 170 of the headrest body 162 and an opposite end 212 engaging a portion of the mounting post 160.

The rachet mechanism 206 includes a rachet 214 pivotally coupled to the mounting post 160 and a rack 216 having a plurality of one-way directional rack teeth 218 fixedly secured to the headrest body 162 within the cavity 170. The rachet 214 further comprises a support member 220 fixedly secured along the raised ridge 184 of the mounting post 160 and extending outwardly therefrom to a distal end having a pivot aperture 222 therein. A pawl 224 is pivotally coupled to the support member 220 for selectively engaging the rack teeth 218.

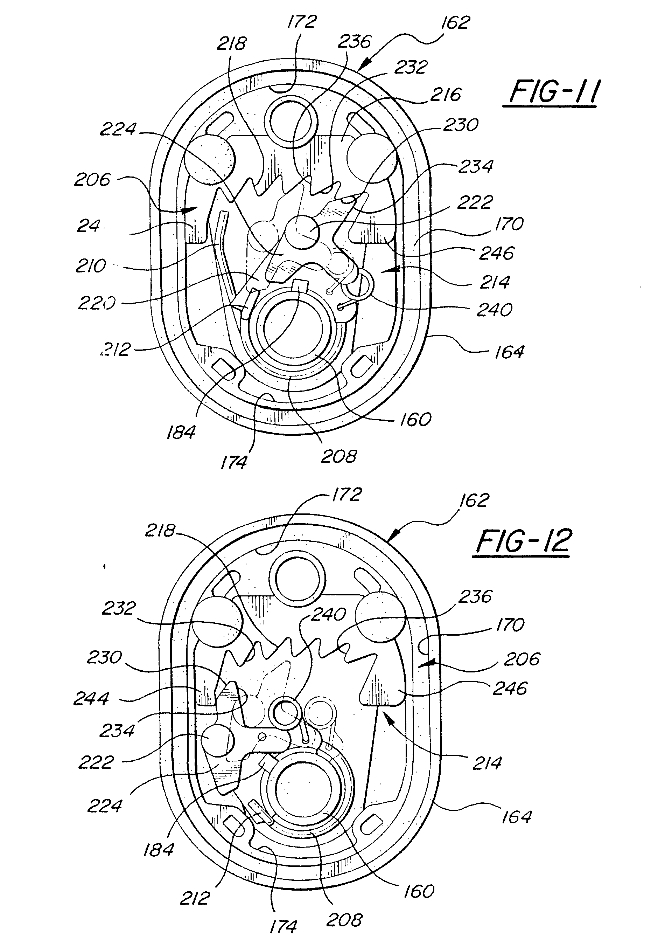

The pawl 224 is secured by a pivot pin through the pivot aperture 222 on the support member 220 and thus pivotal thereabout. The pawl 224 includes a projecting spring attachment tab 226 and a rack engaging portion 220 for operatively engaging the teeth 218 of the rack 216. The rack engaging portion 228 includes an inclined camming surface 230 facing forwardly of the headrest assembly 158 for cooperating with inclined camming surfaces 232 of the rack teeth 218. The camming surfaces 230 and 232 cooperate to enable the headrest body 162 to pivot forwardly as shown in Figures 11 and 12. The rack engaging portion 228 further includes a locking surface 234 facing rearwardly which cooperates with corresponding rearwardly facing locking surfaces 236 of the rack teeth 218 to prevent the headrest body 162 from pivoting rearwardly as also shown in Figures 11 and 12.

A spring member 238 has a first end 240 connected to the support member 220 and a second end 242 connected to the spring attachment portion 226 of the pawl 224 for normally biasing the pawl 224 toward operational engagement with the rack teeth 218.

As shown in Figures 11 and 12, the rack 216 is secured within the cavity 170 in the first side end 164 of the headrest body 162 and extends along an arcuate path in the upper portion 172 of the cavity 170. As indicated in Figure 11, a starting position is established by the headrest body 162 being disposed in a rearward most position with a rack engaging portion 228 of the pawl 224 disposed immediately behind the first or rearward most tooth 218 of the rack 216. The headrest body 162 is tilted forwardly in a direction of the seat bottom 152 by bodily grasping the headrest body 162 and rotating the body 162 so that the pawl 224 ratchets between adjacent teeth 218 of the rack 216. The spring member 218 extends along one side, i.e. the rearward side, of the pivot 222 and biases the pawl 224 in a clockwise direction. The torsion spring 208 acts to maintain the locking surface 234 of the pawl 224 forced against the locking surface 236 of the associated tooth 218 to maintain the angularly adjusted position of the headrest body 162.

As indicated in Figure 12, the headrest body 162 is returned to the starting position by tilting the headrest body 162 completely forwardly so that the camming surface 230 of the pawl 224 engages a forward projection 244 formed as a continuous extension of the last or forward most rack tooth 218. The forward projection 244 causes the pawl 224 to automatically rotate clockwise about the pivot 222 so that the line of force of the spring member 238 is over center of the pivot 222 (i.e., the spring 238 extends along the opposite side of the pivot 222), thereby causing the spring 238 to urge and maintain the pawl 224 in a knocked over inoperative position. In this position, the pawl 224 is completely disengaged from the rack 216 so that the headrest body 162 may be rotated rearwardly toward the starting position shown in Figure 11 without the pawl 224 engaging the teeth 218. Upon reaching the rearward most tilted position, the tip of the pawl 224 engages the inside of the first tooth, or a rearward engaging projection 246, forcing the pawl 224 to rotate counter-clockwise and further causing the spring 238 to rotate back over center of the pivot 222 to urge the pawl 224 into the upstanding operational position.

Referring to Figures 8, 9 and 13, a shoulder belt restraint 248 is operatively connected to the seat assembly 150 for restraining the occupant in the seat. The shoulder belt restraint 248 includes a waist belt 250 and a shoulder belt 252. The shoulder belt 252 extends from a retractor mounted in a telescoping tower 254. The telescoping tower 254 selectively adjusts the shoulder belt restraint 248 between a lower position immediately adjacent the seat back 154 and a raised position spaced vertically above the seat back 154. The upper portion of the tower 254 provides the support structure 190 for supporting the headrest assembly 158 as previously described. Thus, the telescoping tower 254 adjusts the position of both the shoulder belt 252 and the headrest assembly 158 between the lower and raised position relative to the seat back 154.

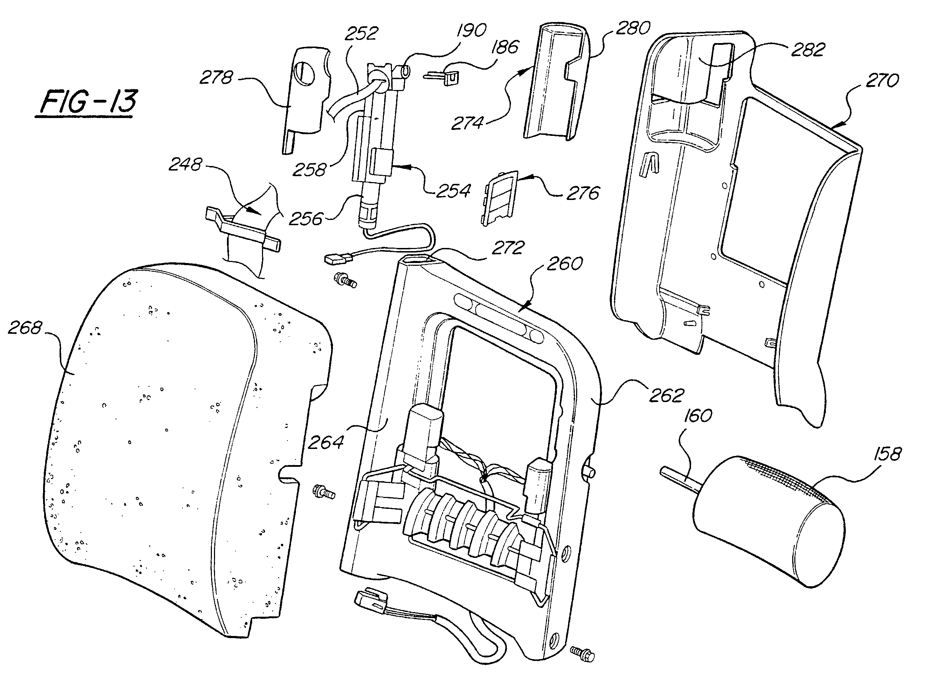

Referring to Figure 13, the telescoping tower 254 includes a lower portion 256 fixedly secured to the seat back 154 and an upper portion 258 moveable relative to the lower portion 256 between the lower position and the raised position spaced vertically above the seat back 154. The seat back 154, as shown in Figure 13, comprises a rigid seat back frame 260 having opposite first 262 and second 264 sides interconnected by an upper cross member 266. A contoured foam cushion and trim cover 268 overlays the seat back frame 260 and a rigid seat back trim panel 270 overlays the rear side of the seat back frame 260. One of the first 262 or second 264 sides of the seat back frame 260 includes a hollow reinforcing member 272 for receiving and supporting the lower portion 256 of the telescoping tower 254. A tower cover 274 is fixedly secured to at least a portion of the tower 254 and vertically moveable therewith. The tower cover 274 includes an expandable window portion 276 coupled between the tower 254 and the seat back 154 for automatically expanding the coverage of the tower 254 upon movement of the tower 254 between the lower position and the raised position.

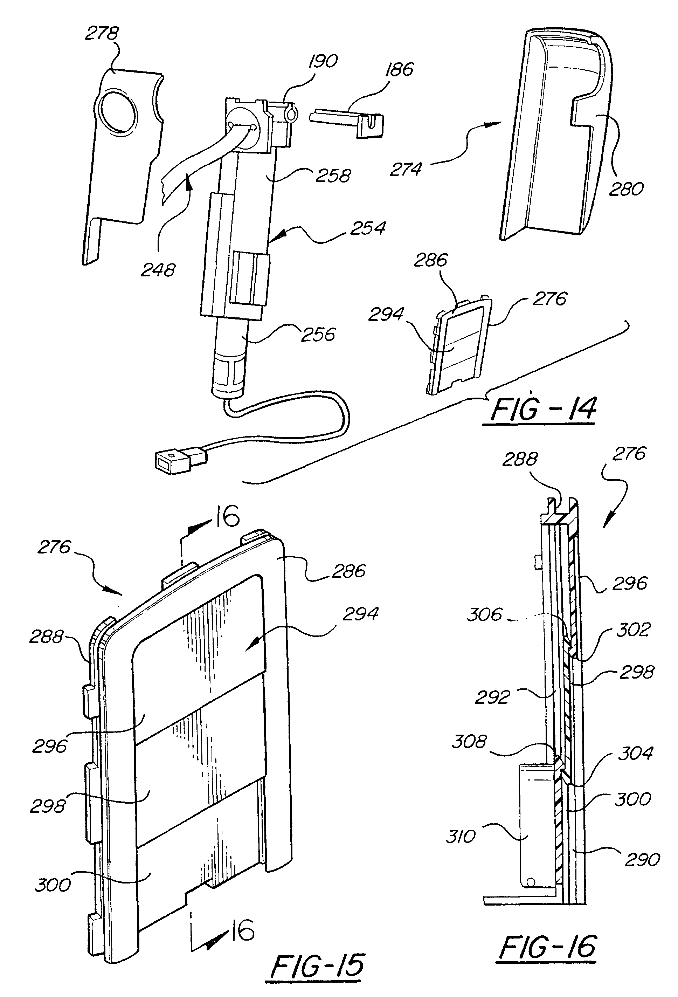

More specifically, as shown in Figures 13 and 14, the tower cover 274 includes front 278 and rear 280 cover panels covering both the upper and lower tower portions and the window portion 276 slidably coupled between the front 278 and rear 280 cover panels for expanding coverage of the upper tower portion 258 upon movement relative to the lower tower portion 256 between the lower and raised positions.

The front cover panel 278 extends partially around and covers the telescoping tower 254 along the forward side adjacent the seat back cushion 268. Similarly, the rear cover panel 280 wraps partially around and covers the rear side of the telescoping tower 254 adjacent the seat back trim panel 270. The telescoping tower 254 and front 278 and rear 280 cover panels extend through an opening 282 in the seat back trim panel 270 to move vertically through the opening 282 relative to the seat back 154 between the lowered and raised positions. A gap 284 or space extends between the front 278 and rear 280 cover panels adjacent the first side 262 of the seat back frame 270 which exposes the upper portion 258 of the tower 254 in the raised position. Therefore, the window portion 276 is coupled between the front 278 and rear 280 cover panels for extending coverage of the upper tower portion 258 upon movement of the tower 254 between the lowered and raised positions.

As shown in Figure 14 through 16, the window portion 276 comprises a generally U-shaped outer rim 286 having an outer channel 288 and a pair of spaced apart parallel inner channels or tracks 290 and 292. The outer channel 288 receives the edge portion of the opposing front 278 and rear 280 cover panels for securing the window portion 276 therebetween. The inner channels or tracks comprise first 290 and second 292 parallel tracks and slidably receive a plurality of overlapping sliding panes 294 for extending coverage of the upper tower portion 258 by expanding and contracting in overlapping relationship upon movement of the tower 254 between the lowered and raised positions. Specifically, each of the panes 294 slide independently within the inner channels 290 and 292 of the outer rim 286 to expand and contract the coverage in overlapping relationship of the window portion 276 over the upper tower portion 258. The preferred embodiment of Figure 16 includes three overlapping window panes 294, an upper pane 296, middle pane 298 and a lower pane 300. The upper pane 294 is fixedly secured to the outer rim 286 and includes a lower locking tab 302 for engaging the middle pane 298. The middle pane 298 is slidable within the first inner channel 290 independent of both the upper 296 and lower 300 panes and includes a lower locking tab 304 for engaging the lower pane 300 and an upper locking tab 306 for engaging with the lower locking tab 302 of the upper pane 296 for limiting movement of the middle pane 298 along the first track 290. The lower pane 300 is slidable within the second track 292 independent of both the upper 296 and middle 298 panes and includes an upper locking tab 308 for engaging the lower locking tab 304 of the middle pane 293 for limiting movement of the lower pane 300 along the second track 292. The lower pane 300 further includes a outwardly extending connector 310 which is connected to the seat back frame 260 such that when the upper portion 258 of the tower 254 is extended to the raised position, the sliding panes 294 are expanded in sliding relationship along the tracks 290 and 292 of the outer rim 286 to extend the window portion 276 coverage over the upper tower portion 258 upon movement to the raised position. The lower pane 300 slides first along the second track 292 until the locking tab 308 engages the lower locking tab 304 of the middle pane 298. The lower pane 300 continues to slide along the second track 292 and the middle pane 298 slides along the first track 290 until the upper locking tab 306 engages the lower locking tab 302 of the upper pane 296 with the tower 254 in the raised position.

As the telescoping tower 254 is adjusted to the lower position, the sliding panes 294 engage the top of the seat back frame 260 and contract in overlapping relationship to allow the tower 254 and front 278 and rear 280 cover panels to extend through the opening 282 in the seat back trim panel 270 and lower the headrest assembly 158 and shoulder restraint 248 to the lower position adjacent the seat back 154. In otherwords, the lower 300 and middle 298 panes engage the seat back 154 as the tower 254 is moved to the lower position and thus slide upwardly along the respective tracks 290 and 292 with the middle pane 298 overlapping behind the upper pane 296 and the lower pane 300 overlapping behind the upper 296 and middle 298 panes. In the raised position, the locking tabs between each of the upper 296, middle 298 and lower 300 panes engage to prevent separation of the panes and eliminate the possibility of a space or gap therebetween. As it be appreciated that any number of window panes 294 and respective tracks 290 and 292 may be provided in the window cover portion 276 to accommodate varying height or distance travel of the tower 254 from the lower to the raised position spaced above the seat back 154.

Alternatively, the window portion 276 may include a flexible sheet having a first end connected to the seat back panel 270 between the front 278 and rear 280 panels and a second end connected to the seat back 154 for vertically expanding and contracting in an accordion type fashion along a track between the front and rear panels upon movement of the tower 254 between the lower and raised position to extend coverage of the upper tower portion.

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood that within the scope of the appended claims wherein reference numerals are merely for convenience and are not to be in any way limiting, the invention may be practiced otherwise than as specifically described.

## Claims

1. A vehicle seat assembly (10) comprising a bottom frame (22) having laterally opposed first and second sides (24, 26), a backrest frame (48) having an upper end (50) and a lower end (52), a first pivot element (58) pivotally connecting said lower end (52) of said backrest frame (48) to said first side (24) of said bottom frame (22), a second pivot element (60) pivotally connecting said lower end (52) of said backrest frame (48) to said second side (26) of said bottom frame (22), a safety restraint belt (16)/having a shoulder strap segment (20) connected to said upper end (50) of said backrest frame (48) generally above said first pivot element (58), **characterized in that** said seat assembly (10) includes an anti-rotation stop plate (100) disposed between said bottom frame (22) and said first pivot element (58) for restraining unwanted deformation of said first pivot element (58) relative to said bottom frame (22) in response to high load forces applied to said upper end (50) of said backrest frame (48) by said shoulder strap segment (20) of said safety restraint belt (16).

2. The seat assembly (10) according to Claim 1, **characterized in that** said stop plate (100) is fixed to said bottom frame (22).

3. The seat assembly (10) according to Claim 2, **characterized in that** said stop plate (100) extends from said bottom frame (22) and has a generally horizontal surface spaced from said first pivot element (58).

4. The seat assembly (10) according to any of the preceding claims, **characterized in that** said first pivot element (58) includes a first power adjuster for controlling pivotal movement of said backrest frame (48) relative to said bottom frame (22).

5. The seat assembly (10) according to Claim 4, **characterized in that** said first pivot element (58) includes a protective housing (62) for said first power adjuster.

6. The seat assembly (10) according to Claim 5, **characterized in that** said housing (62) includes a nose portion (64) disposed adjacent said stop plate (100), said nose plate (64) coming into contact with said stop plate (100) in response to the high load forces applied to said upper end (50) of said backrest frame (48) by said shoulder strap segment (20) of said safety restraint belt (16).

7. The seat assembly (10) according to Claim 6, **characterized in that** said nose portion (64) is spaced from said stop plate (100).

8. The seat assembly (100) according to Claims 5 to 7, **characterized in that** said first power adjuster includes an actuator screw (68) and nut (70) disposed within said housing (62).

9. The seat assembly (10) according to any of the preceding claims, **characterized in that** said first pivot element (58) includes a bell crank (66) pivotally connected thereto, said bell crank (66) having a first leg (72) pivotally connected to said lower end (52) of said backrest frame (48), said bell crank (66) having a second leg (74) pivotally connected to a first power adjuster for controlling pivotal movement of said backrest frame (48) relative to said bottom frame (22).

10. The seat assembly (150) according to any of the preceding claims, **characterized in that** said seat assembly (150) further includes a cantilevered headrest assembly (158) including a horizontally extending mounting post (160) adapted to be attached to the seat assembly (150), said mounting post (160) defining an axis, and a headrest body (162) having an opening (168) formed therein for receiving one end (180) of said mounting post (160), an adjusting mechanism (206) is provided to permit adjustable pivotal movement of said headrest body (162) about said axis of said mounting post (160).

11. The seat assembly (150) according to Claim 10, **characterized in that** said adjustment mechanism (206) is carried by said headrest body (162) and is coupled between said mounting post (160) and said headrest body (162).

12. The seat assembly (150) according to Claim 10 **characterized in that** said seat assembly (150) further includes a retaining mechanism (186,192) carried by said seat assembly (150) and is provided with a cavity (188) for receiving an opposite end (178) of said mounting post (160), said retaining mechanism (192) being operable to retain said mounting post (160) when inserted into said cavity (188), said retaining mechanism (192) preventing rotation of said headrest body (162) relative to said mounting post (160).

13. The seat assembly (150) according to Claim 10, **characterized in that** said adjusting mechanism includes a ratchet mechanism (206) operatively connected between said mounting post (160) and said headrest body (162) for providing ratcheting pivotal movement of said headrest body (162) relative to said mounting post (160).

14. The seat assembly (150) according to Claim 10, **characterized in that** said mounting post (160) includes an axially raised ridge (184) having a notch (204) formed therein, said retaining mechanism including a guide sleeve (186) having a tubular opening (188) for receiving said mounting post (160), said guide sleeve (186) including a detent (194) selectively received into said notch (204) of said raised ridge (184) of said mounting post (160) to prevent said mounting post (160) from being removed from said guide sleeve (186), said detent (194) also being selectively releasable from said notch (204) of said raised ridge (184) to remove said mounting post (160) from said guide sleeve (186).

15. The seat assembly (150) according to Claim 10, **characterized in that** said seat assembly (150) further including a vertically extending tower (254) mounted on the seat assembly (150), said mounting post (160) extending horizontally from said tower (254), wherein said tower (254) houses a safety restraint belt (248) secured to the seat assembly (150) for restraining an occupant of the seat assembly (150).

16. The seat assembly (10) according to any of the preceding claims, **characterized in that** said backrest frame (48) includes at least one stile (88) having a hollow passage extending between said lower end (52) and an opening adjacent said upper end (50);
a safety restraint belt (16) having a shoulder strap segment (20) extending from said opening (90) adjacent said upper end (50) of said backrest frame (48), and a concealed segment (92) passing through said hollow passage of said stile (88) and terminating at said shoulder strap segment (20);
a spool (96) mounted on said bottom frame (22) for dispensing an end of said safety restraint belt (16) to said concealed segment (92); and
a guide (98) disposed within said hollow passage of said stile (88) for positioning said concealed segment (92) of said safety restraint belt (16) within said hollow passage.

17. The seat assembly (150) according to any of the preceding claims, **characterized in that** said seat assembly (150) further includes:
a telescoping tower (254) mounted to said backrest frame (260) for selectively adjusting the position of said shoulder belt restraint (16) between a lower position adjacent said backrest frame (260) and a raised position spaced vertically from said backrest frame (260); and
a tower cover (274) fixedly secured to at least a portion of said tower (254) and vertically movable therewith, said tower cover (274) including an expandable window portion (276) coupled between said tower (274) and said backrest frame (260) for automatically expanding coverage of said tower (254) upon movement of said tower (254) between said lower position and said raised position.

18. The seat assembly (10) according to any of the preceding claims in combination with an automobile having a generally horizontal floor panel (102) having an edge and an outer sill panel (104) fixed to said edge of said floor panel (102), said outer sill panel (104) having a generally vertical mounting surface projecting above said floor panel (102), said bottom frame (22) having first and second side rails (28,30), said first side rail (28) positioned adjacent said outer sill panel (104), said first and second side rails (28,30) lying in a plane which is generally parallel with said horizontal floor panel (102), **characterized in that** said seat assembly (10) further includes a sill anchor (106) attaching said first side rail (28) directly to said vertical mounting surface of said outer sill panel (104), and a floor anchor (108) attaching said second side rail (30) directly to said floor panel (102).

## Patentansprüche

1. Fahrzeugsitzanordnung (10), die folgendes aufweist:
einen unteren Rahmen (22), der eine erste und eine zweite Seite (24, 26) hat, die einander in Querrichtung gegenüberliegen,
einen Rückenlehnenrahmen (48), der ein oberes Ende (50) und ein unteres Ende (52) hat,
ein erstes Schwenkelement (58), welches das untere Ende (52) des Rückenlehnenrahmens (48) mit der ersten Seite (24) des unteren Rahmens (22) schwenkbar verbindet,
ein zweites Schwenkelement (60), welches das untere Ende (52) des Rückenlehnenrahmens (48) mit der zweiten Seite (26) des unteren Rahmens (22) schwenkbar verbindet, und
einen Sicherheitshaltegurt (16), der ein Schultergurtsegment (20) hat, das mit dem oberen Ende (50) des Rükkenlehnenrahmens (48) im allgemeinen oberhalb des ersten Schwenkelements (58) verbunden ist,
**dadurch gekennzeichnet,**
**daß** die Sitzanordnung (10) eine Verdrehsicherungs-Anschlagplatte (100) aufweist, die zwischen dem unteren Rahmen (22) und dem ersten Schwenkelement (58) angeordnet ist, um eine unerwünschte Verformung des ersten Schwenkelements (58) relativ zu dem unteren Rahmen (22) aufgrund von hohen Belastungskräften zu verhindern, die von dem Schultergurtsegment (20) des Sicherheitshaltegurts (16) auf das obere Ende (50) des Rückenlehnenrahmens (48) aufgebracht werden.

2. Sitzanordnung (10) nach Anspruch 1,
**dadurch gekennzeichnet,**
**daß** die Anschlagplatte (100) an dem unteren Rahmen (22) fest angeordnet ist.

3. Sitzanordnung (10) nach Anspruch 2,
**dadurch gekennzeichnet,**
**daß** sich die Anschlagplatte (100) von dem unteren Rahmen (22) aus erstreckt und eine im allgemeinen horizontale Oberfläche hat, die von dem ersten Schwenkelement (58) beabstandet ist.

4. Sitzanordnung (10) nach einem der
vorhergehenden Ansprüche,
**dadurch gekennzeichnet,**
**daß** das erste Schwenkelement (58) eine erste Krafteinstelleinrichtung aufweist, um die Schwenkbewegung des Rückenlehnenrahmens (48) relativ zu dem unteren Rahmens (22) zu steuern.

5. Sitzanordnung (10) nach Anspruch 4,
**dadurch gekennzeichnet,**
**daß** das erste Schwenkelement (58) ein Schutzgehäuse (62) für die erste Krafteinstelleinrichtung aufweist.

6. Sitzanordnung (10) nach Anspruch 5,
**dadurch gekennzeichnet,**
**daß** das Gehäuse (62) einen Nasenbereich (64) aufweist, der der Anschlagplatte (100) benachbart angeordnet ist, wobei der Nasenbereich (64) mit der Anschlagplatte (100) aufgrund der hohen Belastungskräfte in Kontakt gelangt, die von dem Schultergurtsegment (20) des Sicherheitshaltegurts (16) auf das obere Ende (50) des Rückenlehnenrahmens (48) aufgebracht werden.

7. Sitzanordnung (10) nach Anspruch 6,
**dadurch gekennzeichnet,**
**daß** der Nasenbereich (64) von der Anschlagplatte (100) beabstandet ist.

8. Sitzanordnung (10) nach den Ansprüchen 5 bis 7,
**dadurch gekennzeichnet,**
**daß** die erste Krafteinstelleinrichtung eine Betätigungseinrichtung mit Spindel (68) und Mutter (70) aufweist, die in dem Gehäuse (62) angeordnet sind.

9. Sitzanordnung (10) nach einem der
vorhergehenden Ansprüche,
**dadurch gekennzeichnet,**
**daß** das erste Schwenkelement (58) einen Kniehebel (66) aufweist, der schwenkbar damit verbunden ist, wobei der Kniehebel (66) einen ersten Schenkel (72) hat, der mit dem unteren Ende (52) des Rückenlehnenrahmens (48) schwenkbar verbunden ist, und wobei der Kniehebel (66) einen zweiten Schenkel (74) hat, der mit einer ersten Krafteinstelleinrichtung zur Steuerung der Schwenkbewegung des Rückenlehnenrahmens (48) relativ zu dem unteren Rahmen (22) schwenkbar verbunden ist.

10. Sitzanordnung (150) nach einem der
vorhergehenden Ansprüche,
**dadurch gekennzeichnet,**
**daß** die Sitzanordnung (150) ferner eine einseitig befestigte Kopfstützenanordnung (158) aufweist, die eine sich horizontal erstreckende Montagestange (160) besitzt, die zur Anbringung an der Sitzanordnung (150) ausgebildet ist, wobei die Montagestange (160) eine Achse bildet, und einen Kopfstützenkörper (162) besitzt, in dem eine Öffnung (168) zur Aufnahme des einen Endes (180) der Montagestange (160) ausgebildet ist, wobei ein Einstellmechanismus (206) vorgesehen ist, um eine einstellbare Schwenkbewegung des Kopfstützenkörpers (162) um die Achse der Montagestange (160) zu ermöglichen.

11. Sitzanordnung (150) nach Anspruch 10,
**dadurch gekennzeichnet,**
**daß** der Einstellmechanismus (206) von dem Kopfstützenkörper (162) getragen ist und zwischen der Montagestange (160) und dem Kopfstützenkörper (162) angeschlossen ist.

12. Sitzanordnung (150) nach Anspruch 10,
**dadurch gekennzeichnet,**
**daß** die Sitzanordnung (150) ferner einen Haltemechanismus (186, 192) aufweist, der von der Sitzanordnung (150) getragen ist und mit einem Hohlraum (188) zur Aufnahme eines gegenüberliegenden Endes (178) der Montagestange (160) versehen ist, wobei der Haltemechanismus (192) wirksam ist, um die Montagestange (160) festzuhalten, wenn sie in den Hohlraum (188) eingeführt ist, und wobei der Haltemechanismus (192) eine Drehung des Kopfstützenkörpers (162) relativ zu der Montagestange (160) verhindert.

13. Sitzanordnung (150) nach Anspruch 10,
**dadurch gekennzeichnet,**
**daß** der Einstellmechanismus einen Ratschenmechanismus (206) aufweist, der zwischen der Montagestange (160) und dem Kopfstützenkörper (162) betriebsmäßig angeschlossen ist, um für eine Ratschen-Schwenkbewegung des Kopfstützenkörpers (162) relativ zu der Montagestange (160) zu sorgen.

14. Sitzanordnung (150) nach Anspruch 10,
**dadurch gekennzeichnet,**
**daß** die Montagestange (160) eine axial verlaufende, hochgezogene Rippe (184) aufweist, in der eine Kerbe (204) ausgebildet ist, wobei der Haltemechanismus eine Führungshülse (186) mit einer rohrförmigen Öffnung (188) zur Aufnahme der Montagestange (160) aufweist, wobei die Führungshülse (186) einen Anschlag (194) aufweist, der in der Kerbe (204) der hochgezogenen Rippe (184) der Montagestange (160) selektiv aufgenommen wird, um zu verhindern, daß die Montagestange (160) aus der Führungshülse (186) entfernt wird, wobei der Anschlag (194) auch aus der Kerbe (204) der hochgezogenen Rippe (184) selektiv lösbar ist, um die Montagestange (160) aus der Führungshülse (186) zu entfernen.

15. Sitzanordnung (150) nach Anspruch 10,
**dadurch gekennzeichnet,**
**daß** die Sitzanordnung (150) ferner eine sich vertikal erstreckende Säule (254) hat, die an der Sitzanordnung (150) angebracht ist, wobei sich die Montagestange (160) horizontal von der Säule (254) erstreckt, wobei in der Säule (254) ein Sicherheitshaltegurt (248) untergebracht ist, der an der Sitzanordnung (150) befestigt ist, um einen Fahrgast auf der Sitzanordnung (150) zurückzuhalten.

16. Sitzanordnung (10) nach einem der
vorhergehenden Ansprüche,
**dadurch gekennzeichnet,**
**daß** der Rückenlehnenrahmen (48) folgendes aufweist:
mindestens einen Holm (88) mit einem hohlen Kanal, der sich zwischen dem unteren Ende (52) und einer dem oberen Ende (50) benachbarten Öffnung erstreckt;
einen Sicherheitshaltegurt (16) mit einem Schultergurtsegment (20), das sich von der dem oberen Ende (50) des Rückenlehnenrahmens (48) benachbarten Öffnung (90) aus erstreckt, und mit einem verdeckten Segment (92), das durch den hohlen Kanal des Holms (88) verläuft und an dem Schultergurtsegment (20) endet;
einen Spulenkörper (96), der an dem unteren Rahmen (22) angebracht ist, um ein Ende des Sicherheitshaltegurts (16) an das verdeckte Segment (92) abzugeben; und
eine Führung (98), die in dem hohlen Kanal des Holms (88) angeordnet ist, um das verdeckte Segment (92) des Sicherheitshaltegurts (16) in dem hohlen Kanal zu positionieren.

17. Sitzanordnung (150) nach einem der
vorhergehenden Ansprüche,
**dadurch gekennzeichnet,**
**daß** die Sitzanordnung (150) ferner folgendes aufweist:
eine teleskopierbare Säule (254), die an dem Rückenlehnenrahmen (260) angebracht ist, um die Position des Sicherheitshaltegurtes (16) zwischen einer dem Rückenlehnenrahmen (260) benachbarten unteren Position und einer hochgezogenen Position, die von dem Rückenlehnenrahmen (260) vertikal beabstandet ist, selektiv einzustellen; und
eine Säulenabdeckung (274), die zumindest an einem Bereich der Säule (254) fest angebracht und damit in Vertikalrichtung bewegbar ist, wobei die Säulenabdeckung (274) einen ausdehnbaren Fensterbereich (276) aufweist, der zwischen die Säule (274) und den Rückenlehnenrahmen (260) gekoppelt ist, um bei einer Bewegung der Säule (254) zwischen der unteren Position und der hochgezogenen Position einen Abdeckbereich der Säule (254) automatisch zu erweitern.

18. Sitzanordnung (10) nach einem der vorhergehenden Ansprüche, in Kombination mit einem Kraftfahrzeug, das ein im allgemeinen horizontales Bodenblech (102) mit einem Rand und ein äußeres Schwellerblech (104) hat, das an dem Rand des Bodenblechs (102) festgelegt ist, wobei das äußere Schwellerblech (104) eine im allgemeine vertikale Montageoberfläche hat, die über das Bodenblech (102) vorsteht, wobei der untere Rahmen (22) eine erste und eine zweite Seitenschiene (28, 30) hat, wobei die erste Seitenschiene (28) dem äußeren Schwellerblech (104) benachbart positioniert ist, wobei die erste und die zweite Seitenschiene (28, 30) in einer Ebene liegen, die mit dem horizontalen Bodenblech (102) im allgemeinen parallel ist,
**dadurch gekennzeichnet,**
**daß** die Sitzanordnung (10) ferner einen Schwelleranker (106), der die erste Seitenschiene (28) direkt an der vertikalen Montageoberfläche des äußeren Schwellerblechs (104) anbringt, und einen Bodenanker (108) hat, der die zweite Seitenschiene (30) direkt an dem Bodenblech (102) anbringt.

## Revendications

1. Ensemble de siège de véhicule (10) comprenant un cadre inférieur (22) ayant un premier et un deuxième côtés latéralement opposés (24, 26), un cadre de dossier (48) ayant une extrémité supérieure (50) et une extrémité inférieure (52), un premier élément de pivot (58) reliant de façon pivotante la dite extrémité inférieure (52) du dit cadre de dossier (48) au dit premier côté (24) du dit cadre inférieur (22), un deuxième élément de pivot (60) reliant de façon pivotante la dite extrémité inférieure (52) du dit cadre de dossier (48) au dit deuxième côté (26) du dit cadre inférieur (22), une ceinture de retenue de sécurité (16) ayant un segment de sangle d'épaule (20) relié à la dite extrémité supérieure (50) du dit cadre de dossier (48) sensiblement au-dessus du dit premier élément de pivot (58), **caractérisé en ce que** le dit ensemble de siège (10) comprend une plaque de butée anti-rotation (100) disposée entre le dit cadre inférieur (22) et le dit premier élément de pivot (58) pour empêcher une déformation indésirable du dit premier élément de pivot (58) par rapport au dit cadre inférieur (22) en réponse aux forces élevées appliquées à la dite extrémité supérieure (50) du dit cadre de dossier (48) par le dit segment de sangle d'épaule (20) de la dite ceinture de retenue de sécurité (16).

2. Ensemble de siège (10) selon la revendication 1, **caractérisé en ce que** la dite plaque de butée (100) est fixée au dit cadre inférieur (22).

3. Ensemble de siège (10) selon la revendication 2, **caractérisé en ce que** la dite plaque de butée (100) s'étend à partir du dit cadre inférieur (22) et elle présente une surface sensiblement horizontale espacée du dit premier élément de pivot (58).

4. Ensemble de siège (10) selon une quelconque des revendications précédentes, **caractérisé en ce que** le dit premier élément de pivot (58) comprend un premier dispositif de réglage de force, pour contrôler le mouvement pivotant du dit cadre de dossier (48) par rapport au dit cadre inférieur (22).

5. Ensemble de siège (10) selon la revendication 4, **caractérisé en ce que** le dit premier élément de pivot (58) comprend un boîtier de protection (62) pour le dit premier dispositif de réglage de force.

6. Ensemble de siège (10) selon la revendication 5, **caractérisé en ce que** le dit boîtier (62) comprend un nez (64) adjacent à la dite plaque de butée (100), le dit nez (64) venant en contact avec la dite plaque de butée (100) en réponse aux forces élevées appliquées à la dite extrémité supérieure (50) du dit cadre de dossier (48) par le dit segment de sangle d'épaule (20) de la dite ceinture de retenue de sécurité (16).

7. Ensemble de siège (10) selon la revendication 6, **caractérisé en ce que** le dit nez (64) est espacé de la dite plaque de butée (100).

8. Ensemble. de siège (100) selon les revendications 5 à 7, **caractérisé en ce que** le dit premier dispositif de réglage de force comprend une vis d'actionneur (68) et un écrou (70) placés à l'intérieur du dit boîtier (62).

9. Ensemble de siège (10) selon une quelconque des revendications précédentes, **caractérisé en ce que** le dit premier élément de pivot (58) comprend un levier coudé (66) qui lui est relié de façon pivotante, le dit levier coudé (66) ayant une première branche (72) reliée de façon pivotante à la dite extrémité inférieure (52) du dit cadre de dossier (48), le dit levier coudé (66) ayant une deuxième branche (74) reliée de façon pivotante à un premier dispositif de réglage de force, pour contrôler le mouvement pivotant du dit cadre de dossier (48) par rapport au dit cadre inférieur (22).

10. Ensemble de siège (150) selon une quelconque des revendications précédentes, **caractérisé en ce que** le dit ensemble de siège (150) comprend en outre un appuie-tête en porte-à-faux (158) incluant une tige de montage horizontale (160) prévue pour fixation à l'ensemble de siège (150), la dite tige de montage (160) définissant un axe, et un corps d'appuie-tête (162) dans lequel est formée une ouverture (168) pour recevoir une extrémité (180) de la dite tige de montage (160), et un mécanisme de réglage (206) est prévu pour permettre un mouvement pivotant réglable du dit corps d'appuie-tête (162) autour du dit axe de la dite tige de montage (160).

11. Ensemble de siège (150) selon la revendication 10, **caractérisé en ce que** le dit mécanisme de réglage (206) est porté par le dit corps d'appuie-tête (162) et est eouplé entre la dite tige de montage (160) et le dit corps d'appuie-tête (162).

12. Ensemble de siège (150) selon la revendication 10, **caractérisé en ce que** le dit ensemble de siège (150) comprend en outre un mécanisme de retenue (186, 192) porté par le dit ensemble de siège (150) et comportant une cavité (188) pour recevoir une extrémité opposée (178) de la dite tige de montage (160), le dit mécanisme de retenue (192) étant manoeuvrable de manière à retenir la dite tige de montage (160) lorsqu'elle est insérée dans la dite cavité (188), le dit mécanisme de retenue (192) empêchant la rotation du dit corps d'appuie-tête (162) par rapport à la dite tige de montage (160).

13. Ensemble de siège (150) selon la revendication 10, **caractérisé en ce que** le dit mécanisme de réglage comprend un mécanisme à rochet (206) fonctionnellement connecté entre la dite tige de montage (160) et le dit corps d'appuie-tête (162) pour permettre un mouvement pivotant à encliquetage du dit corps d'appuie-tête (162) par rapport à la dite tige de montage (160).

14. Ensemble de siège (150) selon la revendication 10, **caractérisé en ce que** la dite tige de montage (160) comporte une nervure axialement en saillie (184) dans laquelle est formée une encoche (204), le dit mécanisme de retenue incluant un manchon de guidage (126) à ouverture tubulaire (188) pour recevoir la dite tige de montage (160), le dit manchon de guidage (186) incluant un élément d'enclenchement (194) sélectivement reçu dans la dite encoche (204) de la dite nervure en saillie (184) de la dite tige de montage (160) pour empêcher la dite tige de montage (160) de sortir du dit manchon de guidage (186), le dit élément d'enclenchement (194) étant également sélectivement libérable de la dite encoche (204) de la dite nervure en saillie (184) pour enlever la dite tige de montage (160) du dit manchon de guidage (186).

15. Ensemble de siège (150) selon la revendication 10, **caractérisé en ce que** le dit ensemble de siège (150) comprend en outre une tourelle verticale (254) montée sur l'ensemble de siège (150), la dite tige de montage (160) s'étendant horizontalement à partir de la dite tourelle (254), dans lequel la dite tourelle (254) loge une ceinture de retenue de sécurité (248) fixée à l'ensemble de siège (150) pour retenir un occupant de l'ensemble de siège (150).

16. Ensemble de siège (10) selon une quelconque des revendications précédentes, **caractérisé en ce que** le dit cadre de dossier (48) comprend au moins un montant (88) ayant un passage creux qui s'étend entre la dite extrémité inférieure (52) et une ouverture adjacente à la dite extrémité supérieure (50) ;
une ceinture de retenue de sécurité (16) ayant un segment de sangle d'épaule (20) qui s'étend à partir de la dite ouverture (90) adjacente à la dite extrémité supérieure (50) du dit cadre de dossier (48), et un segment caché (92) qui passe dans le dit passage creux du dit montant (88) et se termine au dit segment de sangle d'épaule (20) ;
une bobine (96) montée sur le dit cadre inférieur (22) pour distribuer une extrémité de la dite ceinture de retenue de sécurité (16) au dit segment caché (92) ; et
un guidage (98) disposé dans le dit passage creux du dit montant (18) pour positionner le dit segment caché (92) de la dite ceinture de retenue de sécurité (16) à l'intérieur du dit passage creux.

17. Ensemble de siège (150) selon une quelconque des revendications précédentes, **caractérisé en ce que** le dit ensemble de siège (150) comprend en outre :
une tourelle télescopique (254) montée sur le dit cadre de dossier (260) pour régler sélectivement la position de la dite sangle de retenue d'épaule (16) entre une position plus basse adjacente au dit cadre de dossier (260) et une position relevée, verticalement espacée du dit cadre de dossier (260) ; et
un couvercle de tourelle (274) fixé à au moins une partie de la dite tourelle (254) et verticalement mobile avec cette dernière, le dit couvercle de tourelle (274) comportant une fenêtre extensible (276) couplée entre la dite tourelle (274) et le dit cadre de dossier (260) de manière à augmenter automatiquement la couverture de la dite tourelle (254) lors d'un mouvement de la dite tourelle (254) entre la dite position abaissée et la dite position relevée.

18. Ensemble de siège (10) selon une quelconque des revendications précédentes en combinaison avec une automobile ayant un panneau de plancher sensiblement horizontal (102) présentant un bord, et un panneau de seuil extérieur (104) fixé au dit bord du dit panneau de plancher (102), le dit panneau de seuil extérieur (104) présentant une surface de montage sensiblement verticale qui fait saillie au-dessus du dit panneau de plancher (102), le dit cadre inférieur (22) comportant un premier et un deuxième rails latéraux (28, 30), le dit premier rail latéral (28) étant adjacent au dit panneau de seuil extérieur (104), les dits premier et deuxième rails latéraux (28, 30) étant placés dans un plan qui est sensiblement parallèle au dit panneau de plancher horizontal (102), **caractérisé en ce que** le dit ensemble de siège (10) comprend en outre une pièce d'ancrage de seuil (106) qui fixe le dit premier rail latéral (28) directement à la dite surface de montage verticale du dit panneau de seuil extérieur (104), et une pièce d'ancrage de plancher (108) qui fixe le dit deuxième rail latéral (30) directement au dit panneau de plancher (102).
